Europäisches Patentamt

European Patent Office

Office européen des brevets

(11) Publication number: **0 369 080**

**A1**

# EUROPEAN PATENT APPLICATION

(21) Application number: 88310927.4

(22) Date of filing: 18.11.88

(51) Int. Cl.5: **B32B 27/16, B60J 1/20**

(43) Date of publication of application:
23.05.90 Bulletin 90/21

(84) Designated Contracting States:
AT BE CH DE ES FR GB GR IT LI LU NL SE

(71) Applicant: ROLL-SCREENS, INC. c/o The Incorporators, Ltd.
Coffee Run Professional Center Lancaster Pike and Loveville Road
Hockessin Delaware 19707(US)

(72) Inventor: Laniado, Josephe
3/3 Mishol Haadmonit Street
Jerusalem(IL)
Inventor: Har-El, Moshe
6/1 Shaul Hamelech Street
Jerusalem(IL)

(74) Representative: Devons, David Jon
MARKS & CLERK 57-60 Lincoln's Inn Fields
London WC2A 3LS(GB)

(54) Multilayer plastic sheets and processes for the preparation thereof.

(57) A multilayer plastic sheet of self-rollable material comprises at least two layers (2,4,6) of material joined to one another at states of different relative stretch and capable of alternating between a relaxed and a tensioned state and of inherently assuming a rolled-up configuration in said relaxed state as a result of the different states of stretch of the respective layers and to retain said inherent property of spontaneous rolling up even after prolonged exposure to sunlight and heat. A process for preparing a rollable sheet containing at least one layer of laminatable plastic material, said sheet being capable of alternating between a relaxed and a tensioned state and of inherently assuming a rolled up configuration in said relaxed state and retaining said inherent property of spontaneous rolling up even after prolonged exposure to sunlight and heat, comprises heating and stretching a first sheet of plastic material and laminating said first sheet of prestretched plastic material to a second sheet of non-stretched material, to form a self-rollable composite sheet.

Fig.1.

## MULTILAYER PLASTIC SHEETS AND PROCESSES FOR THE PREPARATION THEREOF

The present invention relates to a multilayer plastic sheet of rollable material and to a process for the preparation thereof. More particularly the present invention relates to a sunshade or sunblind adapted for attachment across a vehicle window surface for protecting the interior of a motor-vehicle against sun rays and glare, to specially prepared sheet materials for use therein and to processes for the preparation of these sheets.

As described in U.S. Patent 4,202,396 the state of the art of sunshades for motorcars before said patents generally fell into two main categories: Outdoor and indoor. The outdoor devices were comprised of an arcuate semi-transparent member mounted above the upper portion of the front window. These devices filter and shade part of the interior of a car only when the sun is at the higher part of its orbit.

The indoor means were either curtains or venetian blinds which were permanently affixed to the side or rear window frames. Alternatively, for the protection of front window, plain flat sheets of any rigid material were used which were dimensioned so that they could be placed on the dashboard cover.

U.S. Patent 4,202,396, however, changed the state of the art by providing a foldable sunblind for motor-car windows characterised by a self-contained unit adapted to assume either a stretched position, forming a substantially continuous partition detachably mountable at the inner side of said windows, or a collapsed position, forming a box-like package. Said unit comprised a series of planar rectangular board elements foldably joined to each other along their longitudinal edges. At least two flaps were integrally provided with two spaced elements adapting the said partitions to be appended from a fitting of the motorcar.

Said sunblinds are today by far the most popular and widely sold of the various types now on the market. However, they suffer from several major disadvantages.

Firstly, the folding and unfolding process is tedious due to the fact that the sunshade with its rigid joined panels is cumbersome, since each panel measures about 60cm x l3cm and each shade contains about ten such panels.

Secondly, even in its folded state, said sunshade occupies substantial space on the floor of a car when not in use and is constantly getting under foot and in the way. Moreover, the folded blind is to be held together by a rubber band which is frequently easily lost.

For several years there has also been available on the market a sunblind formed of a sheet of thin rollable plastic laminated with a thin sheet of aluminum foil and provided at its ends with means for attachment across a car window surface as described e.g. in German Offenlegungshchrifft 1955584.

While such a shade is much more compact in its rolled state than the box-like package of joined rectangular panels, the rolling and unrolling thereof is also time-consuming and annoying or else is based on the attachment of one end of said sheet to an expensive steel coil spring mechanism.

With this state of the art in mind and especially in light of the widespread need for sunshades which would protect the interiors of motor vehicles from the sun's heat and harmful bleaching rays and the aforementioned dissatisfaction with the disadvantages of the presently marketed products, there is now provided a process for preparing a new type of sunblind which ameliorates the above problems and provides a much more convenient and easy to use and store sunblind than those that have been heretofore available.

Thus according to the present invention there is now provided a process for preparing a self-rollable sheet containing at least one layer of laminatable plastic material said sheet being capable of alternating between a relaxed and a tensioned state and of inherently assuming a rolled up configuration in said relaxed state and retaining said inherent property of spontaneous rolling up even after prolonged exposure to sunlight and heat, said process comprising heating and stretching a first sheet of plastic material and laminating said first sheet of prestretched plastic material to a second sheet of non-stretched material, to form a self-rolling composite sheet.

The invention also provides a multi layer plastic sheet of self-rollable material comprising at least two layers of material joined to one another at states of different relative stretch and capable of alternating between a relaxed and a tensioned state and of inherently assuming a rolled-up configuration in said relaxed state as a result of the different states of stretch of the respective layers and to retain said inherent property of spontaneous rolling up even after prolonged exposure to sunlight and heat.

In its preferred embodiments the present invention provides a sun blind for protecting the interior of a motor vehicle against sun rays and glare comprising a multi-layer plastic sheet of self-rollable material comprising at least two layers of material joined to one another at states of different relative stretch, said sheet being capable of alternating between a relaxed and a tensioned state and of inherently assuming a rolled-up configuration around an axis in said relaxed state as a result of the different states of stretch of the layers, and to retain said inherent property of spontaneous rolling up even after prolonged exposure to sunlight and the heat generated in the interior of a closed motor vehicle exposed to sunlight, said blind containing material interfering with at least a substantial portion of solar radiation impinging thereon in said tensioned unrolled state, and, said blind further comprising means for attachment of the ends thereof across a window surface wherein upon release of at least one of the ends of said sheet, said sheet will spontaneously roll up upon itself as a result of the different states of stretch of the respective layers.

Preferably said layer is a plastic material selected from polyethylene, polyethylene terephthalate, polypropylene, mylar and nylon.

As will be realized after studying the examples hereinafter, the self-rolling multi layer sheets of the present invention can be prepared in different ways applying the principles of manufacture taught herein.

In general a first sheet of laminatable plastic material is passed over a first glue applying set of rollers of a laminating machine and passed through the oven thereof at a temperature which can vary e.g. between 100°C and 200°c to enhance the elasticity and stretchability of the sheet, at a speed which can vary e.g. between about 80 m/min to about 120m/min depending on the plastic used, the length of the oven and the relationship retained between the speed and temperature.

The speed of the take-up laminating rollers and the feed glue applying rollers are adjusted relative to each other to create a stretch of the sheet in the oven of about 4 to 15%.

The stretched sheet is then laminated to a relatively non-stretched second sheet of material and due to the different states of stretch of the respective layers, the formed composite sheet will spontaneously roll-up upon itself.

To augment this self-rolling effect and to cause a tightening of the roll the composite sheet is irridiated, heated and/or exposed to moisture to effect a softening of said second sheet and/or a cross-linking of the material therein.

In preferred multi layer sunblind said sheet can alternatively be made of a layer of polyethylene terephthalate joined to a layer of nylon or of polypropylene joined to nylon which materials are laminated under different states of stretch.

Alternatively, said multi layer sheet preferably comprises two layers of polyethylene terephthalate joined to each other while in different states of relative stretch.

In U.S. Patent 2,826,523 there is described a self-rolling tarpaulin or covering made of laminated layers of rubber bonded with a bonding agent or by vulcanization however said covering could not be used as a sunblind for a motor vehicle since it is not sufficiently heat resistant to withstand the heat generated in the interior of a closed motor vehicle exposed to sunlight which heat is known, by black box experiments, to reach as much as 75°c.

Preferably said sheets also comprise a layer of reflecting material for reflecting at least part of the solar radiation impinging therein and especially preferred is a pretensioned- inherently self-rolling sheet according to the present invention having a layer of reflective aluminum incorporated therein.

Said multilayered sheet can also be prepared using a layer of nylon, polyethylene terephthalate or polypropylene which can be tensioned and then attached to a layer of another material such as heavy duty paper or aluminum foil.

While the sunblinds according to the present invention can be made to roll up around a fixed rigid support provided at one or at both of its ends in a scroll like fashion, in preferred embodiments of the present invention said blind will roll up around an axis established at some midpoint between its edges as described and explained more fully hereinafter.

Thus in one preferred embodiment of the present invention there is provided a self-rolling sunblind according to the present invention comprising two sheets concentrically and substantially coextensively interrolled with one edge of a first sheet joined to an aligned edge of a second sheet, said joined edges serving substantially as the axis around which said blind rolls up in said relaxed state, the respective unjoined ends of said sheets being provided with means for attachment across a window surface.

In especially preferred embodiments of the present invention the self-rolling property of the sheets themselves is utilized to eliminate the need for a separate rigid support for each of the unjoined ends of said sheets, each of said ends being rolled tightly about itself to form a substantially rigid column to which is affixed attachment means provided, e.g. with eyelets for attachment to hooks affixed e.g. by suction cups to both ends of the window to be covered.

The present invention also provides such a sunblind whenever in combination with a window of a motor vehicle.

Alternatively there is provided a self rolling sunblind according to the present invention wherein said sheet is provided with a fold line across one of the axis thereof, said fold line dividing said sheet into two concentrically and substantially coextensively interrolled portions, said fold line serving substantially as the axis around which said blind portions roll up in said relaxed state.

As will be realized, the self-rolling sheets of the present invention can be used not only for sun blinds but also for the preparation of awnings, shades and even tents wherein the inherent property of spontaneous rolling up even after prolonged exposure to sunlight and heat as well as the property of ready compact storage are advantageous.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

Fig. 1 is a schematic representation of a three layered pretensioned laminar sheet from which a preferred blind of the present invention is formed:

Fig. 2 is a schematic perspective view of a sunblind in its unrolled state;

Fig. 3 is a cross-sectional view of Fig. 2;

Fig. 4 is a further embodiment of a blind according to the invention partly rolled up on both of its lateral sides; and

Fig. 5 is another embodiment of a blind according to the invention partly rolled up at one of its lateral sides.

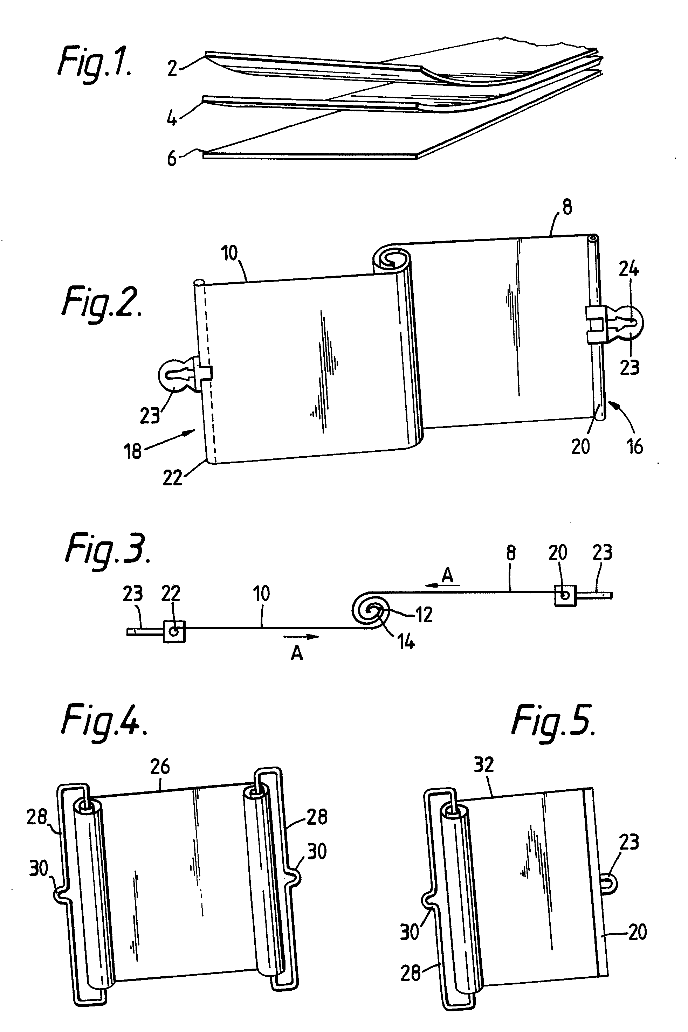

In Fig. 1 there is schematically shown a portion of a sunblind according to the present invention in its tensioned unrolled configuration. This blind is composed of a first sheet of medium density polyethylene 2 laminated to a second sheet of aluminum foil 4 which is in turn laminated to a third stretched sheet of medium density polyethylene 6 (see example 1 hereinafter). As explained hereinbefore, due to the different states of stretch of the respective layers the blind will inherently and spontaneously roll up upon itself when not secured in a tensioned unrolled configuration.

In Figures 2 and 3 there is schematically shown an especially preferred embodiment of the present invention in which two pretensioned sunblind sheets 8, 10 according to the present invention are joined together by the welding of one edge 12 of a first sheet 8 to an aligned edge 14 of the second sheet 10 in an arrangement whereby due to the internal tension of each sheet they will concentrically roll around each other, with said joined edges 12 and 14 serving substantially as the axis around which said blind rolls-up in its relaxed state.

The two unjoined ends 16, 18 of said sheets are each rolled about themselves to form a coreless substantially rigid column 20, 22 to which are affixed attachment means 23 provided with apertures 24 releasably attachable to hooks (not shown) affixed to both ends of the window to be covered.

The thus prepared blind when released spontaneously rolls up upon itself in the direction of arrows A as a result of the different states of stretching of the pretensioned sheets of the present invention.

It will be realized that instead of joining edges 12 and 14 of two separate sheets 8 and 10 as shown, the same effect can be achieved by using a press to form a permanent fold line in a single sheet at the area where edges I2 and 14 are shown as joined in Fig. 3.

In Fig. 4, there is illustrated another embodiment of the present invention in which a pretensioned sunblind sheet 26 according to the present invention is attached at both of its ends to a bow-like holder 28. Said holders are provided with eyelets 30 for attachment to hooks (not shown) affixed to both ends of the window to be covered.

Similarly, in Fig. 5 there is illustrated a pretensioned sun blind sheet 32 which rolls up around a single bow-like holder 28, the free end of which is rolled upon itself to form a coreless substantially rigid column to which is affixed attachment means 23 provided with an aperture 24 and attachable as described with reference to figures 2-4.

As will be realized, embodiment of figures 2 and 3 is especially preferred since said first preferred embodiment requires no parts except for the sheet itself and attachment clips 23 as the sheet itself acts as its own axis and its own rigidifying end strip.

While the invention will now be described in connection with certain preferred embodiments in the following examples so that aspects thereof may be more fully understood and appreciated, it is not intended to limit the invention to these particular embodiments. On the contrary, it is intended to cover all alternatives, modifications and equivalents as may be included within the scope of the invention as defined by the appended claims. Thus, the following examples which include preferred embodiments will serve to illustrate the practice of this invention, it being understood that the particulars shown are by way of example and for purposes of illustrative discussion of preferred embodiments of the present invention only are presented in the cause of providing what is believed to be the most useful and readily understood description of preparation procedures as well as of the principles and conceptual aspects of the invention.

## EXAMPLE 1

A sheet of medium density polyethylene 50 microns thick, is glued to a sheet of 12 microns thick aluminum foil in a laminating machine (Faustel, Butler Wisconsin) to form a first composite sheet.

A second sheet of polyethylene, 25 microns thick, is stretched 10% in an oven at 125°C and then glued to the aluminum foil side of said first composite sheet in said laminating machine to form a second composite sheet.

Said second composite sheet is rolled on a spool and cured at room temperature for 48 hours with the second sheet of polyethylene material on the inside.

After curing, the sheet is cut into smaller sheets measuring 45 by 60 cm, two such smaller sheets are superposed and one edge of a first sheet is heat welded to an aligned edge of a second sheet.

The joined sheets spontaneously concentrically roll up upon themselves with said welded end serving substantially as the axis around which said sheets roll up.

In order to assure that this inherent property of spontaneous rolling up is retained even after prolonged exposure to sunlight and heat the rolled up blind is introduced into a plastic bag, the air removed therefrom by vacuum to limited ozonization and the blind is subjected to 5,000,000 units of radiation from a Cobalt 60 irradiator to effect crosslinking of the polyethylene.

## EXAMPLE 2

A transparent sheet of polyethylene terephthalate 12 microns thick is covered with a layer of aluminium having a thickness sufficient to make it completely opaque said layer being deposited using a vaporizing process in vacuum.

Said sheet is passed over a first glue applying set of rollers of a laminating machine and passed through a 6 meter oven thereof at a temperature of 1200°. At the outlet of the oven, a second set of laminating rollers is adjusted to a speed of 120 m/min while the aforementioned glue applying rollers are adjusted to a slower speed to create a 6% stretch along the sheet between the two sets of rollers.

A second sheet of polyethylene terephthalate 50 microns thick is also fed to said laminating rollers wherein said first stretched sheet and said second sheet are glued and laminated to each other to form a composite sheet. Said composite sheet is spontaneously self-rolling and in order to assure that this inherent property of spontaneous rolling up is retained even after prolonged exposure to sunlight and heat the rolled up sheet is heated in an oven at 190°C for 20 minutes to soften said second sheet and tighten the rolled effect of said composite sheet.

The sheet is then cut into smaller sheets measuring 45 by 60 cm, two such smaller sheets are superposed and one edge of a first sheet is heat welded to an aligned edge of a second sheet.

The joined sheets spontaneously concentrically roll up upon themselves with said welded end serving substantially as the axis around which said sheets roll up.

## EXAMPLE 3

The procedure of example 2 was repeated, however, instead of using a transparent sheet of polyethyelene terephthalate covered with aluminum, a polyethylene sheet having gray pigment already incorporated therein was used. A product similar to example 2 was produced.

## EXAMPLE 4

A transparent sheet of polypropylene 50 microns thick is covered with a layer of aluminium having a thickness sufficient to allow only 20% light transmission therethrough said layer being deposited using a vaporizing process in vacuum.

A second sheet of nylon 12 microns thick is stretched 10% in an oven of a laminating machine at 140°C and then glued to the aluminized side of said polypropylene sheet in said laminating machine to form a composite sheet.

Said composite sheet is rolled and then heated in an oven at 50°C for 30 minutes to soften said polypropylene sheet and thereby tighten and strengthen the self-rolling property of the sheet.

## EXAMPLE 5

A transparent sheet of polyethylene terephthalate 12 microns thick is covered with a layer of aluminium having a thickness sufficient to make it completely opaque said layer being deposited using a vaporizing process in vacuum.

Said sheet is passed over a first glue applying set of rollers of a laminating machine and passed through a 6 meter oven thereof at a temperature of 120°. At the outlet of the oven, a second set of laminating rollers is adjusted to a speed of 120 m/min while the aforementioned glue applying rollers are adjusted to a slower speed to create a 6% stretch along the sheet between the two sets of rollers.

A second sheet of 80 gram white paper is also fed to said laminating rollers wherein said first stretched sheet and said second sheet are glued and laminated to each other to form a composite sheet. Said composite sheet is self-rolling and in order to assure that this inherent property of spontaneous rolling up is retained even after prolonged exposure to sunlight and heat the rolled up sheet is placed in a steam chamber for 30 minutes to soften said second sheet and tighten the rolled effect of said composite sheet.

The sheet is then cut into smaller sheets measuring 45 by 60 cm, two such smaller sheets are superposed and one edge of a first sheet is heat welded to an aligned edge of a second sheet.

The joined sheets spontaneously concentrically roll up upon themselves with said welded end serving substantially as the axis around which said sheets roll up.

It will be evident to those skilled in the art that the invention is not limited to the details of the foregoing illustrative embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A process for preparing a self-rollable sheet containing at least one layer of laminatable plastic material, said sheet being capable of alternating between a relaxed and a tensioned state and of inherently assuming a rolled up configuration in said relaxed state and retaining said inherent property of spontaneous rolling up even after prolonged exposure to sunlight and heat, said process comprising heating and stretching a first sheet of plastic material and laminating said first sheet of prestretched plastic material to a second sheet of non-stretched material, to form a self-rollable composite sheet.

2. A process according to claim 1 wherein said layer of plastic material is selected from polyethylene, polyethylene terephthalate, polypropylene, mylar and nylon.

3. A process according to claim 1 wherein after lamination said composite sheet is heated to effect a softening of said second sheet and a tightening of said rolled effect upon cooling.

4. A process according to claim 1 wherein said second sheet of non-stretched material is paper and wherein after lamination said composite sheet is exposed to moisture to effect a softening of said second sheet and a tightening of said rolled effect upon cooling.

5. A process according to claim 1 wherein said first sheet is stretched by about 4-15% before lamination to said second sheet.

6. A process according to claim 1 wherein said first sheet is stretched while at a temperature of about 100° to about 200°C.

7. A process according to claim 1 wherein said first sheet is passed through the oven of a laminating machine at a speed of about 80 m/min to about 120 m/min.

8. A process for preparing a self-rollable sheet containing at least one layer of laminatable plastic material, said sheet being capable of alternating between a relaxed and a tensioned state and of inherently assuming a rolled up configuration in said relaxed state and retaining said inherent property of spontaneous rolling up even after prolonged exposure to sunlight and heat of up to 75°C for use as a sunblind for protecting the interior of a motor vehicle against sun rays and glare, said process comprising heating and stretching a first sheet of plastic material and laminating said first sheet of prestretched plastic material to a second sheet of non-stretched material, to form a self-rollable composite sheet and then subjecting said rolled composite sheet to irridation and/or heating.

9. A multi layer plastic sheet of self-rollable material comprising at least two layers of material joined to one another at states of different relative stretch and capable of alternating between a relaxed and a tensioned state and of inherently assuming a rolled-up configuration in said relaxed state as a result of the different states of stretch of the respective layers and to retain said inherent property of spontaneous rolling up even after prolonged exposure to sunlight and heat.

10. The sheet of claim 9 comprising a layer of polyethylene joined to a layer of nylon.

11. The sheet of claim 9 comprising two layers of a polyethylene plastic material joined to one another while in different states of relative stretch.

12. The sheet of claim 9 comprising a layer of stretched polyethylene joined to a layer of paper.

13. The sheet of claim 9 further comprising a layer of reflecting material for reflecting at least part of the solar radiation impinging thereon.

14. A sun blind for protecting the interior of a motor vehicle against sun rays and glare comprising a multi-layer plastic sheet of self-rollable material comprising at least two layers of material joined to one another at states of different relative stretch, said sheet being capable of alternating between a relaxed and a tensioned state and of inherently assuming a rolled-up configuration around an axis in said relaxed state as a result of the different states of stretch of the layers, and to retain said inherent property of spontaneous rolling up even after prolonged exposure to sunlight and the heat generated in the interior of a closed motor vehicle exposed to sunlight, said blind containing material interfering with at least a substantial portion of solar radiation impinging thereon in said tensioned unrolled state, and, said blind further comprising means for attachment of the ends thereof across a window surface wherein upon release of at least one of the ends of said sheet, said sheet will spontaneously roll up upon itself as a result of the different states of stretch of the respective layers.

15. A sunblind according to claim 14 comprising a multi-layer plastic sheet having at least two layers of plastic material joined to each other at states of different relative stretch, at least one of said layers being of polyethylene, polyethylene terephthalate, polypropylene or nylon, said blind comprising means for attachment of the ends thereof across a window surface wherein upon release of at least one of the ends of said sheet, said sheet will spontaneously roll up upon itself as a result of the different states of stretch of the respective layers.

16. A sunblind according to claim 15 comprising a layer of reflecting material for reflecting at least part of the solar radiation impinging thereon.

17. A sunblind according to claim 16, wherein said reflective material is a layer of aluminum foil.

18. A sunblind according to claim 15, wherein said sheet comprises a layer of polyethylene terephthalate joined to a layer of nylon.

19. A sunblind according to claim 15, wherein said sheet is formed of polypropylene.

20. A sunblind according to claim 15, wherein said sheet comprises two layers of polyethylene terephthalate joined to each other while in different states of relative stretch.

21. A sunblind comprising two sheets according to claim 9 concentrically and substantially coextensively interrolled with one edge of a first sheet joined to an aligned edge of a second sheet said joined edges serving substantially as the axis around which said blind rolls up in said relaxed state, the respective unjoined ends of said sheets each being rolled upon themselves to form substantially rigid columns to which are affixed attachment means for releasable attachment to complementary means affixed to both ends of vehicle window surface.

22. A sunblind according to claim 21 wherein said sheet is provided with a fold line along an axis thereof, said fold line dividing said sheet into two concentrically and substantially coextensively interrolled portions, said fold line serving substantially as the axis around which said blind portions roll up in said relaxed state.

Fig.1.

2

4

6

Fig.2.

8

10

24

23

23

18

22

20

16

Fig.3.

8    20    23

23    22    10    A

12

14

A

Fig.4.

Fig.5.

26

32

28    28

30    30

23

30

28    20

30

28

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 091 588 (TOYOBO CO. LTD) * Page 1, lines 56-64; page 2, lines 27-44; page 2, lines 83-111; figures 1d,1e,2a,2b; example 16 * | 1,2,9 | B 32 B 27/16 B 60 J 1/20 |
| A | | 11,19, 20 | |
| Y | US-A-3 620 896 (P.J. GLASGOW) * Column 1, summary; column 2, lines 34-58, line 59 * | 1,2,8,9 | |
| D,Y | US-A-2 826 523 (BLASZKOWSKI et al.) * Column 1, line 71 - column 2, line 3 * | 1,2,8,9 ,21,22 | |
| Y | US-A-4 433 711 (H.S. LEW) * Figures 1,2; column 1, line 55 - column 2, line 31 * | 21,22 | |
| A | | 14,15 | |

TECHNICAL FIELDS
SEARCHED (Int. Cl.5)

B 32 B
B 60 J
E 06 B

**The present search report has been drawn up for all claims**

| Place of search | Date of completion of the search | Examiner |
|---|---|---|
| THE HAGUE | 13-07-1989 | MCCONNELL C.H. |